# EUROPÄISCHE PATENTSCHRIFT

(11) **EP 2 171 293 B1**
(45) Veröffentlichungstag und Bekanntmachung des Hinweises auf die Patenterteilung: **28.11.2012**
(21) Anmeldenummer: 08784248.0
(22) Anmeldetag: 25.06.2008
(51) Int. Cl.: F16B 13/12

(54) **SPREIZANKER UND VERFAHREN ZUR VORZUGSWEISE OBERFLÄCHENNAHEN VERANKERUNG IN EINEM ANKERGRUND**
EXPANSION ANCHOR AND METHOD FOR THE PREFERABLY SURFACE-NEAR ANCHORING IN AN ANCHORING BASE
ELEMENT D'ANCRAGE A EXPANSION ET PROCEDE D'ANCRAGE DE CET ELEMENT DANS UNE BASE D'ANCRAGE DE PREFERENCE A PROXIMITE DE LA SURFACE

(30) Priorität: 02.07.2007 DE 102007030737
(43) Veröffentlichungstag der Anmeldung: 07.04.2010
(73) Patentinhaber: Schnarr, Eugen, 63762 Grossostheim (DE)
(72) Erfinder: GÖTTLICH, Jutta, 30900 Wedemark (DE)
(74) Vertreter: Thürer, Andreas
(86) Internationale Anmeldenummer: PCT/DE2008/001046
(87) Internationale Veröffentlichungsnummer: WO 2009/003447

(56) Entgegenhaltungen:
- EP-A- 0 216 233
- DE-U- 1 906 206
- DE-U1- 8 022 962
- FR-A- 2 130 091

## Beschreibung

Die Erfindung betrifft einen Spreizanker sowie ein Verfahren zur vorzugsweise oberflächennahen Verankerung des Spreizankers in einem Ankergrund.

Im Bereich der Bautechnik stellt sich häufig die Aufgabe, Lasten in Bauteile wie Beton oder Stahlbeton einzuleiten. Hierzu sind diverse Befestigungsmittel bekannt, die je nach ihrem Mechanismus und der Art der Kraftübertragung eingeteilt werden können. Für Verankerungen in sicherheitsrelevanten Bereichen werden Befestigungsmittel in der Regel mit relativ großen Setztiefen von 90 mm und mehr, also nicht mehr oberflächennah, eingesetzt und im Ankergrund verankert. Je nach Beschaffenheit des Ankergrundes kann es bei der Erstellung der dafür erforderlichen tiefen Aufnahmebohrungen zu Schwierigkeiten kommen.

Patent EP 0216233 offenbart ein Spreizanker gemäß dem Stand der Technik.

Aufgabe der vorliegenden Erfindung ist es daher, einen Spreizanker zu schaffen, der ohne großen Aufwand vorzugsweise oberflächennah im Ankergrund verankerbar ist, wobei der Spreizanker auch in sicherheitsrelevanten Bereichen einsetzbar ist und Verankerungen mit ausreichend hohen Haltewerten ermöglicht. Ferner liegt der Erfindung die Aufgabe zugrunde, ein Verfahren zum schnellen Setzen des Spreizankers im vorzugsweise oberflächennahen Ankergrund bereitzustellen, derart, dass direkt nach dem Setzen, also ohne Wartezeit, ein Bauteil oder dergleichen am Spreizanker befestigt werden kann.

Diese Aufgabe wird durch einen Spreizanker mit den Merkmalen des Anspruchs 1 und durch ein Verfahren mit den Merkmalen des Anspruchs 7 gelöst. Vorteilhafte Ausgestaltungen und Weiterbildungen der Erfindung ergeben sich aus den jeweiligen Unteransprüchen.

### BESTÄTIGUNGSKOPIE

Die erfindungsgemäße Lösung sieht einen Spreizanker aus einer Spreizhülse und einem Spreizkörper vor, wobei die Spreizhülse durch Längsschlitze, welche in Setzrichtung vorderem Bereich der Spreizhülse angeordnet sind, in Spreizzungen unterteilt ist und in Setzrichtung hinterem Bereich ein Innengewinde aufweist, und wobei der Spreizkörper, vorzugsweise in Form eines konisch sich in Setzrichtung verjüngenden Kegelstumpfes, in Setzrichtung vorderem Bereich der Spreizhülse innerhalb der Spreizhülse angeordnet ist.

Ein solcher Spreizanker ist ohne großen Aufwand vorzugsweise oberflächennah im Ankergrund verankerbar, wobei der Spreizanker auch in sicherheitsrelevanten Bereichen einsetzbar ist und Verankerungen mit ausreichend hohen Haltewerten ermöglicht.

Einer Weiterbildung der Erfindung sieht vor, dass der Spreizanker in eine vorgegebene Bohrung eines Ankergrundes mit geringer Setztiefe setzbar, vorzugsweise einschlagbar, ist. Die Setztiefe beträgt weniger als 90 mm, bevorzugt weniger als 80 mm, weiter bevorzugt weniger als 70 mm, weiter bevorzugt weniger als 60 mm, weiter bevorzugt weniger als 50 mm.

Eine vorteilhafte Ausgestaltung der Erfindung sieht vor, dass die Spreizhülse mittels einer Schraube aus Schraubenschaft und Schraubenkopf, welche vorzugsweise in Setzrichtung vorderem Bereich des Schraubenschaftes gewindelos und im hinteren Bereich mit einem zum Innengewinde der Spreizhülse passenden Außengewinde ausgebildet ist, aufspreizbar ist, derart, dass durch Einschrauben dieser Schraube in die Spreizhülse und anschließendem Anziehen der Spreizkörper in Setzrichtung nach vorne gedrückt wird, so dass sich die Spreizhülse aufspreizt.

Vorzugsweise ist der gewindelose Teil des Schraubenschaftes im Durchmesser kleiner als der mit dem Außengewinde versehene Teil des Schraubenschaftes. Zweckmäßigerweise ist die Länge der Schraube bzw. des Schraubenschaftes definiert vorgegeben und an die verwendete Spreizhülse und an den in der Spreizhülse angeordneten Spreizkörper angepasst, vorzugsweise derart, dass eine definierte Aufspreizung erfolgt.

Eine Weiterbildung der Erfindung sieht vor, dass der Spreizkörper aus Kunststoff oder Metall, vorzugsweise aus Stahl besteht.

Weiterhin ist vorgesehen, dass die Spreizzungen auf der Außenseite ihrer freien Enden wenigstens eine, vorzugsweise mehrere hintereinander, besonders bevorzugt drei hintereinander angeordnete Schneidkanten aufweisen.

Eine vorteilhafte Ausgestaltung der Erfindung sieht vor, dass die Spreizzungen derart ausgebildet sind, dass diese beim Hineindrücken des Spreizkörpers in die Spreizhülse aufgespreizt werden und bei weiterem Hineindrücken des Spreizkörpers, entsprechend der Konizität des Spreizkörpers so weit aufschwenken, dass die Schneidkanten in die Wandung der Bohrung im Ankergrund einschneiden und in diesem Bereich dann einen Hinterschnitt in der Bohrung bilden.

Vorzugsweise ist der Übergang zwischen dem nicht in Spreizzungen geteilten Bereich der Spreizhülse und der Spreizzunge zur Bildung einer Sollbiegestelle einstufig ausgebildet, wobei die Steigung vorzugsweise in Form einer schiefen Ebene ausgeführt ist.

Zweckmäßigerweise ist der Spreizanker ein Metallspreizanker, vorzugsweise ein Hinterschnittanker.

Vorzugsweise ist der Spreizanker in Beton- und Stahlbetonbauteile, bevorzugt in Decken, setzbar.

Bei dem Verfahren zur oberflächennahen Verankerung des erfindungsgemäßen Spreizankers in einem Ankergrund wird die Spreizhülse in eine vorgegebene Bohrung des Ankergrundes mit vorzugsweise geringer Setztiefe gesetzt, vorzugsweise eingeschlagen wird und anschließend zur Verankerung im Ankergrund aufgespreizt, indem der Spreizkörper in Setzrichtung nach vorne, also tiefer in die Spreizhülse gedrückt wird.

Eine vorteilhafte Ausgestaltung der Erfindung sieht vor, dass die Spreizhülse mittels einer Schraube aus Schraubenschaft und Schraubenkopf, welche vorzugsweise in Setzrichtung vorderem Bereich des Schraubenschaftes gewindelos und im hinteren Bereich mit einem zum Innengewinde der Spreizhülse passenden Außengewinde ausgebildet ist, aufgespreizt wird, derart, dass durch Einschrauben dieser Schraube in die Spreizhülse und anschließendem Anziehen der Spreizkörper in Setzrichtung nach vorne gedrückt wird, so dass sich die Spreizhülse aufspreizt.

Zweckmäßigerweise wird nach dem Aufspreizen der Spreizhülse die Schraube wieder aus der dann verankerten Spreizhülse herausgeschraubt wird, so dass die verankerte Spreizhülse zur weiteren Verwendung, vorzugsweise zur Befestigung von Bauteilen, zur Verfügung steht, wobei entsprechende Befestigungsmittel, vorzugsweise zur Befestigung der Bauteile, in die Spreizhülse eingeschraubt werden.

Nachfolgend wird die Erfindung anhand eines Ausführungsbeispiels erläutert, das in der Zeichnung dargestellt ist. In dieser zeigt
- Fig. 1: den erfindungsgemäßen Spreizanker mit teilweise eingeschraubter Schraube in a) Seitenansicht, in b) Längsschnittansicht und in c) perspektivischer Darstellung,
- Fig. 2: die Spreizhülse des erfindungsgemäßen Spreizankers in a) Blickrichtung von oben, in b) Seitenansicht, in c) Blickrichtung von unten, in d) Längsschnittansicht, in e) einer perspektivischen Darstellung in Blickrichtung schräg von der Seite, in f) einer perspektivischen Darstellung in Blickrichtung von schräg oben und in g) als Ausschnitt der in d) gezeigten Schneidkanten,
- Fig. 3: den Spreizkörper des erfindungsgemäßen Spreizankers in a) Blickrichtung von oben, in b) Seitenansicht, in c) einer perspektivischen Darstellung in Blickrichtung schräg von der Seite und in d) einer perspektivischen Darstellung in Blickrichtung schräg von der Seite, und
- Fig. 4: die Schraube zum Aufspreizen des erfindungsgemäßen Spreizankers in a) Blickrichtung von oben, in b) Seitenansicht, und in c) perspektivischer Darstellung.

In allen Figuren bezeichnen gleiche Bezugszeichen gleiche Bauteile.

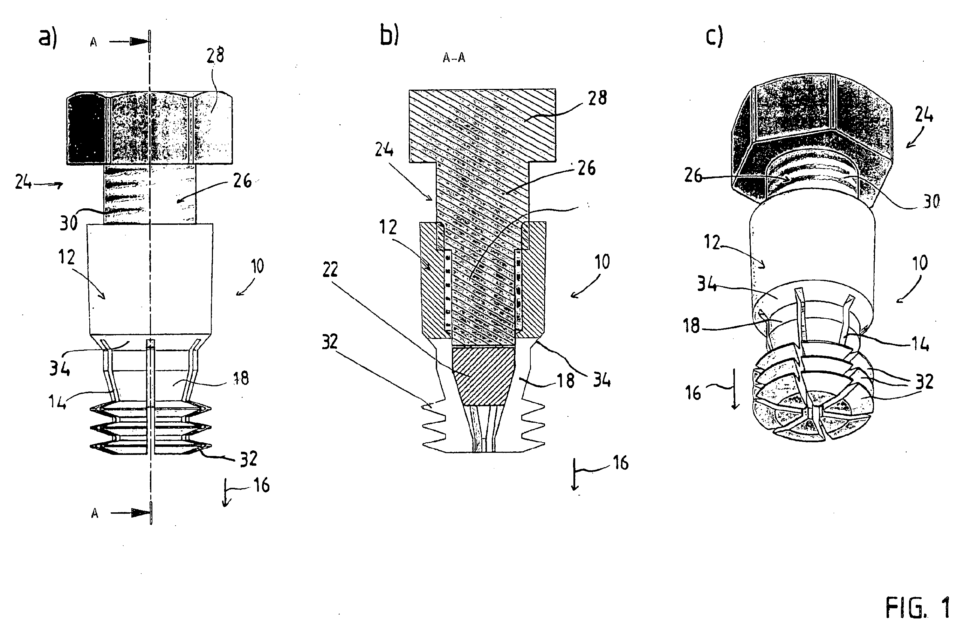

In Fig. 1 ist der erfindungsgemäße Spreizanker 10 mit teilweise eingeschraubter Schraube 24 dargestellt. Der Spreizanker 10 besteht aus einer Spreizhülse 12 und einem Spreizkörper 22. Die Spreizhülse 12 ist durch Längsschlitze 14, welche in Setzrichtung 16 vorderem Bereich der Spreizhülse 12 angeordnet sind, in Spreizzungen 18 unterteilt. Die Spreizhülse 12 weist in Setzrichtung 16 hinterem Bereich ein Innengewinde 20 auf. Der Spreizkörper 22 ist vorliegend in Form eines konisch sich in Setzrichtung 18 verjüngenden Kegelstumpfes ausgebildet und in Setzrichtung 16 vorderem Bereich der Spreizhülse 12 innerhalb der Spreizhülse 12 angeordnet.

Die Spreizhülse 12 wird mittels einer Schraube 24 aus Schraubenschaft 26 und Schraubenkopf 28, welche in Setzrichtung 16 vorderem Bereich des Schraubenschaftes 26 gewindelos und im hinteren Bereich mit einem zum Innengewinde 20 der Spreizhülse 12 passenden Außengewinde 30 ausgebildet ist, aufgespreizt. Hierzu wird durch Einschrauben dieser Schraube 24 in die Spreizhülse 12 und anschließendem Anziehen der Spreizkörper 22 in Setzrichtung 16 nach vorne gedrückt, so dass sich die Spreizhülse 12 aufspreizt.

Der Spreizkörper 22 besteht aus Stahl.

Die Spreizzungen 18 weisen auf der Außenseite ihrer freien Enden drei hintereinander angeordnete Schneidkanten 32 auf.

Die Spreizzungen 18 sind derart ausgebildet, dass diese 22 beim Hineindrücken des Spreizkörpers 22 in die Spreizhülse 12 aufgespreizt werden und bei weiterem Hineindrücken des Spreizkörpers 22 entsprechend der Konizität des Spreizkörpers 22 so weit aufschwenken, dass die Schneidkanten 32 in die hier nicht dargestellte Wandung der Bohrung im Ankergrund einschneiden und in diesem Bereich dann einen Hinterschnitt in der Bohrung bilden.

Der Übergang zwischen dem nicht in Spreizzungen 18 geteilten Bereich der Spreizhülse 12 und der Spreizzunge 18 ist zur Bildung einer Sollbiegestelle einstufig ausgebildet, wobei die Steigung vorzugsweise in Form einer schiefen Ebene 34 ausgeführt ist.

Der Spreizanker 10 ist ein Hinterschnittmetallanker.

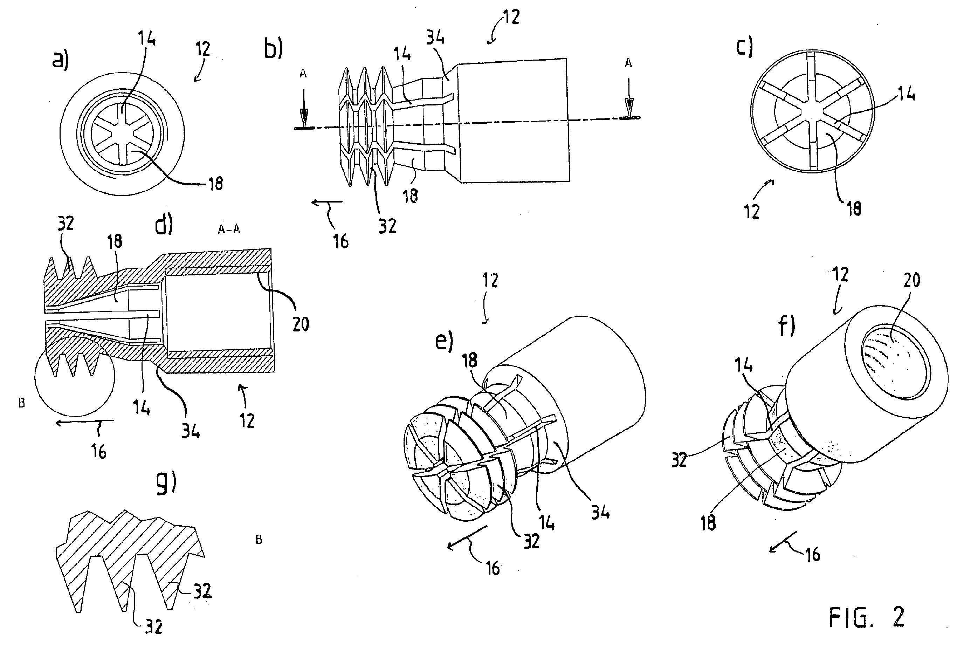

In Fig. 2 ist die Spreizhülse 12 des erfindungsgemäßen Spreizankers 10 in den oben genannten Ansichten dargestellt.

Die Spreizhülse 12 ist durch Längsschlitze 14, welche in Setzrichtung 16 vorderem Bereich der Spreizhülse 12 angeordnet sind, in Spreizzungen 18 unterteilt.

Die Spreizhülse 12 weist in Setzrichtung 16 hinterem Bereich ein Innengewinde 20 auf und kann mittels einer Schraube 24, die im hinteren Bereich mit einem zum Innengewinde 20 der Spreizhülse 12 passenden Außengewinde 30 ausgebildet ist und in die Spreizhülse 12 zum Einwirken auf den Spreizkörper 22 eingeschraubt wird, aufgespreizt werden.

Die Spreizzungen 18 weisen auf der Außenseite ihrer freien Enden drei hintereinander angeordnete Schneidkanten 32 auf und sind derart ausgebildet, dass diese beim Aufspreizen so aufschwenken, dass die Schneidkanten 32 in die hier nicht dargestellte Wandung der Bohrung im Ankergrund einschneiden und in diesem Bereich dann einen Hinterschnitt in der Bohrung bilden.

Der Übergang zwischen dem nicht in Spreizzungen 18 geteilten Bereich der Spreizhülse 12 und der Spreizzunge 18 ist zur Bildung einer Sollbiegestelle einstufig ausgebildet ist, wobei die Steigung in Form einer schiefen Ebene 34 ausgeführt ist.

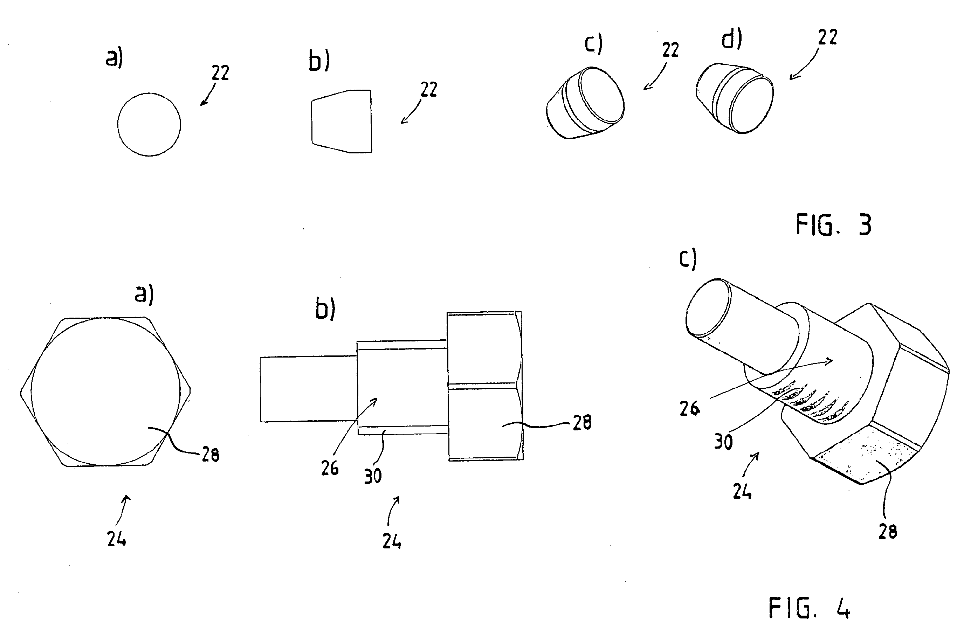

Fig. 3 zeigt Spreizkörper 22 des erfindungsgemäßen Spreizankers 10 in verschieden Ansichten. Der Spreizkörper 22 ist in Form eines konisch sich in Setzrichtung 18 verjüngenden Kegelstumpfes ausgebildet. Dieser besteht Stahl.

Fig. 4 zeigt schließlich eine Schraube 24 zum Aufspreizen des erfindungsgemäßen Spreizankers 12 in verschiedenen Ansichten.

Die Schraube 24 umfasst einen Schraubenschaft 26 und einen Schraubenkopf 28. Der Schraubenschaft 26 ist in Setzrichtung 16 vorderem Bereich gewindelos und im hinteren Bereich mit einem zum Innengewinde 20 der Spreizhülse 12 passenden Außengewinde 30 ausgebildet. Der gewindelose Teil des Schraubenschaftes 26 ist im Durchmesser kleiner als der mit dem Außengewinde 30 versehene Teil des Schraubenschaftes 26.

Die Länge der Schraube 24 bzw. des Schraubenschaftes 26, ist definiert vorgegeben ist und an die verwendete Spreizhülse 12 und an den in der Spreizhülse 12 angeordneten Spreizkörper 22 angepasst.

### Bezugszeichenliste (ist Teil der Beschreibung)

- 10: Spreizanker
- 12: Spreizhülse
- 14: Längsschlitze
- 16: Setzrichtung
- 18: Spreizzungen
- 20: Innengewinde
- 22: Spreizkörper
- 24: Schraube
- 26: Schraubenschaft
- 28: Schraubenkopf
- 30: Außengewinde
- 32: Schneidkante
- 34: schiefe Ebene

## Patentansprüche

1. Hinterschnittanker (10) mit Setzschraube (24), aus einer Spreizhülse (12), die (12) durch Längsschlitze (14), welche in Setzrichtung (16) im vorderen Bereich der Spreizhülse (12) angeordnet sind, in Spreizzungen (18) unterteilt ist, wobei die Spreizzungen (18) auf der Außenseite ihrer freien Enden wenigstens eine, vorzugsweise mehrere hintereinander, besonders bevorzugt drei hintereinander angeordnete Schneidkanten (32) aufweisen, und die (12) in Setzrichtung (16) im hinteren Bereich ein Innengewinde (20) aufweist, und aus einem Spreizkörper (22), in Form eines konisch sich in Setzrichtung (18) verjüngenden Kegelstumpfes, der in Setzrichtung (16) im vorderen Bereich der Spreizhülse (12) innerhalb der Spreizhülse (12) angeordnet ist, wobei die die Spreizhülse (12) mittels einer Setzschraube (24) aus Schraubenschaft (26) und Schraubenkopf (28), welche in Setzrichtung (16) im vorderen Bereich des Schraubenschaftes (26) vorzugsweise gewindelos und im hinteren Bereich mit einem zum Innengewinde (20) der Spreizhülse (12) passenden Außengewinde (30) ausgebildet ist, aufspreizbar ist, derart, dass durch Einschrauben dieser Setzschraube (24) in die Spreizhülse (12) und anschließendem Anziehen der Spreizkörper (22) in Setzrichtung (16) nach vorne gedrückt wird, so dass sich die Spreizhülse (12) aufspreizt, wobei die Länge der Setzschraube (24) bzw. des Schraubenschaftes (26) definiert vorgegeben ist und an die verwendete Spreizhülse (12) und an den in der Spreizhülse (12) angeordneten Spreizkörper (22) angepasst ist, derart, dass eine definierte Aufspreizung erfolgt, wobei Spreizzungen (18) derart ausgebildet sind, dass diese beim Hineindrücken des Spreizkörpers (22) in die Spreizhülse (12) aufgespreizt werden und bei weiterem Hineindrücken des Spreizkörpers (22), zunächst entsprechend der Konizität des Spreizkörpers (22), später vorzugsweise durch plastische Verformung und Stauchung des Spreizkörpers (22), so weit aufschwenken, dass die Schneidkanten (32) in die Wandung der Bohrung im Ankergrund einschneiden und in diesem Bereich dann einen Hinterschnitt in der Bohrung bilden.

2. Hinterschnittanker (10) nach Anspruch 1, **dadurch gekennzeichnet, dass** dieser (10) in eine vorgegebene Bohrung eines Ankergrundes mit vorzugsweise geringer Setztiefe setzbar, vorzugsweise einschlagbar, ist.

3. Hinterschnittanker (10) nach einem der Ansprüche 1 bis 2, **dadurch gekennzeichnet, dass** der Spreizkörper (22) aus Kunststoff oder Metall, vorzugsweise aus Stahl, besteht.

4. Hinterschnittanker (10) nach einem der Ansprüche 1 bis 3, **dadurch gekennzeichnet, dass** der Übergang zwischen dem nicht in Spreizzungen (18) geteilten Bereich der Spreizhülse (12) und der Spreizzunge (18) zur Bildung einer Sollbiegestelle einstufig ausgebildet ist, wobei die Steigung vorzugsweise in Form einer schiefen Ebene (34) ausgeführt ist.

5. Hinterschnittanker (10) nach einem der Ansprüche 1 bis 4 **dadurch gekennzeichnet, dass** der Hinterschnittanker (10) ein Metallspreizanker ist.

6. Hinterschnittanker (10) nach einem der Ansprüche 1 bis 5, **dadurch gekennzeichnet, dass** der Hinterschnittanker (10) in Beton- und Stahlbetonbauteile, bevorzugt in Decken, setzbar ist.

7. Verfahren zur vorzugsweise oberflächennahen Verankerung eines Hinterschnittanker (10) mit Setzschraube (24) nach einem der Ansprüche 1 bis 6 in einem Ankergrund, wobei die Spreizhülse (12) in eine vorgegebene Bohrung des Ankergrundes mit geringer Setztiefe gesetzt, vorzugsweise eingeschlagen, wird und anschließend zur Verankerung im Ankergrund aufgespreizt wird, indem der Spreizkörper (22) in Setzrichtung (16) nach vorne, also tiefer in die Spreizhülse (12) gedrückt wird, wobei die Spreizhülse (12) mittels einer Setzschraube (24) aus Schraubenschaft (26) und Schraubenkopf (28), welche in Setzrichtung (16) im vorderen Bereich des Schraubenschaftes (26) vorzugsweise gewindelos und im hinteren Bereich mit einem zum Innengewinde (20) der Spreizhülse (12) passenden Außengewinde (30) ausgebildet ist, aufgespreizt wird, derart, dass durch Einschrauben dieser Setzschraube (24) in die Spreizhülse (12) und anschließendem Anziehen der Spreizkörper (22) in Setzrichtung (16) nach vorne gedrückt wird, so dass sich die Spreizhülse (12) aufspreizt, wobei die Länge der Setzschraube (24) bzw. des Schraubenschaftes (26) definiert vorgegeben wird und an die verwendete Spreizhülse (12) und an den in der Spreizhülse (12) angeordneten Spreizkörper (22) angepasst wird, derart, dass eine definierte Aufspreizung erfolgt.

8. Verfahren nach Anspruch 7, **dadurch gekennzeichnet, dass** derart viel Druck auf den Spreizkörper (22) ausgeübt wird, dass sich dieser (22) plastisch verformt und die durch das Aufspreizen der Spreizhülse (12) entstehenden Aussparungen zwischen den Spreizzungen (18) mit ausfüllt.

9. Verfahren nach Anspruch 7, **dadurch gekennzeichnet, dass** nach dem Aufspreizen der Spreizhülse (12) die Schraube (24) wieder aus der dann verankerten Spreizhülse (12) herausgeschraubt wird, so dass die verankerte Spreizhülse (12) zur weiteren Verwendung, vorzugsweise zur Befestigung von Bauteilen, zur Verfügung steht, wobei entsprechende Befestigungsmittel, vorzugsweise zur Befestigung der Bauteile, in die Spreizhülse (12) eingeschraubt werden.

## Claims

1. An undercut anchor (10) with a set screw (24), made of an expansion sleeve (12) which (12) is divided into expansion tongues (18) by means of longitudinal slits (14) arranged, in the setting direction (16), in the front region of the expansion sleeve (12), wherein the expansion tongues (18) have, at the outer side of their free ends, at least one, preferably several cutting edges (32) arranged behind one another, particularly preferably three cutting edges (32) arranged behind one another, and which (12) has an internal thread (20) in the rear region in the setting direction (16), and made of an expansion body (22), in the shape of a truncated cone that tapers conically in the setting direction (18) and that, in the setting direction (16), is arranged in the front region of the expansion sleeve (12) inside the expansion sleeve (12), wherein the the expansion sleeve (12) is able to be spread open by means of a set screw (24) made of a screw shaft (26) and a screw head (28), which set screw is configured preferably without a thread in the front region of the screw shaft (26) in the setting direction (16) and with an external thread (30) that fits the internal thread (20) of the expansion sleeve (12) in the rear region, such that, by screwing this set screw (24) into the expansion sleeve (12) and then tightening, the expansion body (22) is pressed forward in the setting direction (16), such that the expansion sleeve (12) spreads open, wherein the length of the set screw (24) or of the screw shaft (26) is predetermined in a defined manner and is adapted to the expansion sleeve (12) used and to the expansion body (22) arranged in the expansion sleeve (12), such that a defined spreading-open arises, wherein expansion tongues (18) are configured such that they are spread open when the expansion body (22) is pressed into the expansion sleeve (12) and, when the expansion body (22) is pressed in further, firstly corresponding to the conicity of the expansion body (22) and subsequently preferably through plastic deformation and compression of the expansion body (22), pivot open to the extent that the cutting edges (32) cut into the wall of the bore in the anchorage and then form in this region an undercut in the bore.

2. The undercut anchor (10) according to claim 1, **characterised in that** it (10) can be set, preferably hammer-driven, into a predetermined bore of an anchorage with a preferably small setting depth.

3. The undercut anchor (10) according to one of claims 1 to 2, **characterised in that** the expansion body (22) consists of plastic or metal, preferably of steel.

4. The undercut anchor (10) according to one of claims 1 to 3, **characterised in that** the transition between the region of the expansion sleeve (12) that is not divided into expansion tongues (18) and the expansion tongue (18) is configured as a single step to form an intentional bending point, wherein the gradient is preferably designed in the form of an oblique plane (34).

5. The undercut anchor (10) according to one of claims 1 to 4, **characterised in that** the undercut anchor (10) is a metal expansion anchor.

6. The undercut anchor (10) according to one of claims 1 to 5, **characterised in that** the undercut anchor (10) is able to be set into concrete components and reinforced-concrete components, preferably in ceilings.

7. A method for preferably near-surface anchoring of an undercut anchor (10) with a setting screw (24) according to one of claims 1 to 6 in an anchorage, wherein the expansion sleeve (12) is set, preferably hammer-driven, into a predetermined bore of the anchorage with a small setting depth, and then spread open to anchor in the anchorage by the expansion body (22) being pressed forward in the setting direction (16), i.e. deeper into the expansion sleeve (12), wherein the expansion sleeve (12) is spread open by means of a set screw (24) made of a screw shaft (26) and a screw head (28), which set screw is configured preferably without a thread in the front region of the screw shaft (26), in the setting direction (16), and with an external thread (30) that fits the internal thread (20) of the expansion sleeve (12) in the rear region, such that, by screwing this set screw (24) into the expansion sleeve (12) and then tightening, the expansion body (22) is pressed forward in the setting direction (16), such that the expansion sleeve (12) spreads open, wherein the length of the set screw (24) or of the screw shaft (26) is predetermined in a defined manner, and is adapted to the expansion sleeve (12) used and to the expansion body (22) arranged in the expansion sleeve (12), such that a defined spreading-open arises.

8. The method according to claim 7, **characterised in that** so much pressure is exerted onto the expansion body (22) that it (22) plastically deforms and helps to fill the recesses between the expansion tongues (18) that arise as a result of the spreading-open of the expansion sleeve (12).

9. The method according to claim 7, **characterised in that**, after the expansion sleeve (12) has been spread open, the screw (24) is unscrewed again from the expansion sleeve (12), which is then anchored, such that the anchored expansion sleeve (12) is available for further use, preferably for securing components, whereby corresponding securing means are screwed into the expansion sleeve (12), preferably to secure the components.

## Revendications

1. Ancre de contre-dépouille (10) avec une vis de pose (24) composée d'une douille expansible (12), qui est divisée en languettes expansibles (18) par des fentes longitudinales (14) disposées au niveau de la zone avant, dans le sens de pose, de la douille expansible (12), les languettes expansibles (18) présentant sur la face extérieure de leurs extrémités libres au moins une arête coupante (32), de préférence plusieurs arêtes coupantes et plus préférentiellement trois arêtes coupantes (32) disposées les unes derrière les autres, et présente un filetage intérieur (20) au niveau de la zone arrière, dans le sens de pose (16), et d'un corps de déploiement (22) en forme de cône tronqué diminuant de façon conique dans le sens de pose (16), corps de déploiement, qui est disposé au niveau de la zone avant, dans le sens de pose (16), de la douille expansible (12), à l'intérieur de celle-ci, la douille expansible (12) pouvant être déployée au moyen d'une vis de pose (24), composée d'une tige de vis (26) et d'une tête de vis (28) et conçue de préférence sans filetage au niveau de la zone avant, dans le sens de pose (16), de la tige de vis (26) et avec un filetage extérieur (30) correspondant au filetage intérieur (20) de la douille expansible (12) au niveau de la zone arrière, de manière qu'en raison du vissage, puis du serrage de cette vis de pose (24) dans la douille expansible (12), le corps de déploiement (22) est poussé vers l'avant dans le sens de pose (16), de sorte que la douille expansible (12) s'écarte, la longueur de la vis de pose (24), à savoir de la tige de vis (26), étant prédéterminée de façon définie et adaptée à la douille expansible (12) utilisée et au corps de déploiement (22) disposé dans la douille expansible (12), de façon qu'un déploiement défini a lieu, des languettes expansibles (18) étant conçues de manière que, lorsque le corps de déploiement (22) est poussé dans la douille expansible (12), elles sont écartées et, lorsque le corps de déploiement (22) continue à être poussé, elles se déploient, d'abord en fonction de la conicité du corps de déploiement (22), puis, par déformation plastique et compression du corps de déploiement (22), jusqu'à ce que les arêtes coupantes (32) incisent la paroi de l'orifice de perçage dans le fond d'ancrage en formant, dans cette zone, une contre-dépouille dans l'orifice de perçage.

2. Ancre de contre-dépouille (10) suivant la revendication 1, **caractérisé en ce que** celui-ci peut être posé, de préférence frappé dans un orifice de perçage prédéterminé dans un fond d'ancrage avec, de préférence, une faible profondeur de pose.

3. Ancre de contre-dépouille (10) suivant une des revendications 1 à 2, **caractérisé en ce que** le corps de déploiement (22) est en matière artificielle ou en métal, de préférence, en acier.

4. Ancre de contre-dépouille (10) suivant une des revendications 1 à 3, **caractérisé en ce que** la transition entre la zone non divisée en languettes expansibles (18) de la douille expansible (12) et la languette expansible (18) est conçue à un seul étage pour former un point destiné au pliage, le pas étant, de préférence, réalisé en forme de plan incliné.

5. Ancre de contre-dépouille (10) suivant une des revendications 1 à 4, **caractérisé en ce que** l'ancre de contre-dépouille (10) est une cheville expansible en métal.

6. Ancre de contre-dépouille (10) suivant une des revendications 1 à 5, **caractérisé en ce que** l'ancre de contre-dépouille (10) peut être posé dans des éléments de construction en béton ou en béton armé, de préférence dans des plafonds.

7. Procédé d'ancrage, de préférence à proximité de surface, d'un ancre de contre-dépouille (10) avec vis de pose (24) suivant une des revendications 1 à 6 dans un fond d'ancrage, la douille expansible (12) étant posée, de préférence frappée, dans un orifice de perçage prédéterminé dans le fond d'ancrage avec une faible profondeur de pose, puis, déployée pour l'ancrage dans le fond d'ancrage en poussant le corps de déploiement (22) vers l'avant, dans le sens de pose (16), c'est-à-dire plus profondément dans la douille expansible (12), celle-ci (12) étant, au moyen d'une vis de pose (24), composée d'une tige de vis (26) et d'une tête de vis (28) et conçue de préférence sans filetage au niveau de la zone avant, dans le sens de pose (16), de la tige de vis (26) et au niveau de la zone arrière avec un filetage extérieur (30) correspondant au filetage intérieur (20) de la douille expansible (12), de manière qu'en raison du vissage, puis du serrage de cette vis de pose (24) dans la douille expansible (12), le corps de déploiement (22) est poussé vers l'avant dans le sens de pose (16) entraînant le déploiement de la douille expansible (12), la longueur de la vis de pose (24), c'est-à-dire de la tige de vis (26), étant prédéterminée de manière définie et adaptée à la douille expansible (12) utilisée et au corps de déploiement (22) disposé dans la douille expansible (12) de sorte qu'un déploiement défini a lieu.

8. Procédé suivant la revendication 7, **caractérisé en ce que** sur le corps de déploiement (22) est exercée une pression aussi importante que ce dernier (22) se déforme plastiquement et remplit les creux formés entre les languettes expansibles (18) du fait du déploiement de la douille expansible (12).

9. Procédé suivant la revendication 7, **caractérisé en ce qu'**après le déploiement de la douille expansible (12), la vis (24) est dévissée de la douille expansible (12) à présent ancrée, de manière que la douille expansible ancrée (12) est disponible pour une utilisation ultérieure, de préférence pour la fixation d'éléments de construction, des moyens de fixation correspondants servant de préférence à la fixation des éléments de construction étant vissés dans la douille expansible (12).
